# EUROPÄISCHE PATENTANMELDUNG

(11) **EP 4 556 343 A1**
(43) Veröffentlichungstag der Anmeldung: **21.05.2025**
(21) Anmeldenummer: 24211306.6
(22) Anmeldetag: 07.11.2024
(51) Int. Cl.: B61B 12/02, B61B 12/06

(54) **ANORDNUNG ZUR ÜBERWACHUNG EINER LAGERUNG EINER ROLLENBATTERIE**

(30) Priorität: 15.11.2023 AT 509252023
(71) Anmelder: Innova Patent GmbH, 6922 Wolfurt (AT)
(72) Erfinder: Saccavini, Stefan, 6850 Dornbirn (AT); Linder, Stefan, 6845 Hohenems (AT)
(74) Vertreter: Patentanwälte Pinter & Weiss OG

(57) **Zusammenfassung**

Um die Überwachung von Lagerungen (2) einer Seilbahn, insbesondere von Rollenbatterien (3) an Seilbahnstützen (4), zu vereinfachen und vor allem die Wartungsintervalle zu verlängern wird eine Anordnung (1) bereitgestellt. In der Anordnung (1) ist zumindest ein Sensor (6) vorgesehen, wobei der zumindest eine Sensor (6) im Bereich der Lagerung (2) angeordnet ist, um eine radiale Lageänderung der Rollenbatterie (3) zur Drehachse (A) aus der radialen Soll-Lage zu erfassen, wobei der zumindest eine Sensor (6) ausgebildet ist, beim Erfassen einer vorgegebenen radialen Lageänderung der Rollenbatterie (3) zur Drehachse (A) aus der radialen Soll-Lage einen Stromfluss zu unterbrechen oder herzustellen, um eine Aktion auszulösen.

## Beschreibung

Die gegenständliche Erfindung betrifft eine Anordnung zur Überwachung einer Lagerung einer Rollenbatterie einer Seilbahn, wobei die Lagerung einen Aufnahmebauteil und einen Bauteil der Rollenbatterie umfasst, wobei der Bauteil der Rollenbatterie über ein Verbindungselement um eine Drehachse schwenkbar an dem Aufnahmebauteil gelagert ist und die Rollenbatterie dabei in einer radialen Soll-Lage zur Drehachse angeordnet ist. Die gegenständliche Erfindung betrifft zudem ein Verfahren zur Überwachung einer Lagerung einer Rollenbatterie.

Seilbahnen gibt es in verschiedensten Ausführungsformen, meist zum Personen- und/oder Gütertransport, beispielsweise als städtisches (urbanes) Verkehrsmittel oder für den Personentransport in Skigebieten, wobei an einem Seil hängende Seilbahnfahrzeugen (z.B. mit Kabinen, Sesseln oder andere Transportbehälter) für den Transport verwendet werden. In der Regel weisen Seilbahnen zumindest zwei Seilbahnstationen auf, zwischen denen die Seilbahnfahrzeuge mittels zumindest einem Seil über eine oder mehrere Seilbahnstützen bewegt werden.

Der Aufbau einer Seilbahnstütze besteht grundsätzlich aus einem Fundament, der Stütze selbst und einem Querträger, auch als Querhaupt oder Joch bezeichnet, am oberen Ende der Stütze. Dabei können Seilbahnstützen als Stahlfachwerkkonstruktion oder als Stahlrohr- bzw. Blechkastenkonstruktion ausgeführt sein. An einer Seilbahnstütze bzw. am Querträger sind üblicherweise mehrere Rollen angeordnet, beispielsweise in Form einer sogenannten Rollenbatterie, um das zumindest eine Seil mit den Seilbahnfahrzeugen zu tragen und zu führen. Zur Lagerung der Rollenbatterien am Querträger werden üblicherweise Verbindungselemente wie Bolzen verwendet. Bei einer Mehrzahl an Rollenbatterien können diese auch an einen zusätzlichen Träger montiert sein, welcher in weiterer Folge am Querträger mittels Bolzen gelagert ist.

Bei Seilbahnen müssen periodisch nach 15 Jahren (30.000 Betriebsstunden) und nachfolgend alle 10 Jahre (20.000 Betriebsstunden) die Bolzen einer Rissprüfung unterzogen werden. Dies ist mit beachtlichem Aufwand verbunden. Insbesondere bei urbanen Seilbahnen sind auf Grund der sehr hohen Betriebsstunden pro Jahr diese Rissprüfungen bereits nach wenigen Jahren (ca. 5 Jahre) durchzuführen. Gleichzeitig besteht das Problem, dass bei urbanen Seilbahnen wegen der erforderlichen Verfügbarkeit nur wenig Zeit für Wartungsarbeiten zur Verfügung steht.

Es ist daher eine Aufgabe der gegenständlichen Erfindung die Überwachung von Lagerungen einer Seilbahn, insbesondere von Rollenbatterien an Seilbahnstützen, zu vereinfachen und vor allem die Wartungsintervalle zu verlängern.

Erfindungsgemäß wird die Aufgabe mit einer Anordnung zur Überwachung einer Lagerung einer Rollenbatterie dadurch gelöst, dass zumindest ein Sensor vorgesehen ist, wobei der zumindest eine Sensor im Bereich der Lagerung angeordnet ist, um eine radiale Lageänderung der Rollenbatterie zur Drehachse aus der radialen Soll-Lage zu erfassen, wobei der zumindest eine Sensor ausgebildet ist, beim Erfassen einer vorgegebenen radialen Lageänderung der Rollenbatterie zur Drehachse aus der radialen Soll-Lage einen Stromfluss zu unterbrechen oder herzustellen, um eine Aktion auszulösen. Durch den zumindest einen Sensor wird einerseits die Lagerung ständig überwacht, wobei es möglich ist eine vorgegebene radiale Lageänderung der Rollenbatterie, z.B. aufgrund einer verschlissenen oder defekten Lagerung, zu erkennen, ohne die Lagerung zu inspizieren. Andererseits können Wartungsintervalle, wie etwa für eine Rissprüfung, verlängert und die erforderliche Zeit für die Wartungsarbeiten wesentlich reduziert werden. Zudem ist es vorteilhaft, dass der zumindest eine Sensor auch in bereits bestehende Seilbahnen bzw. Seilbahnstützen integriert werden kann.

In einer bevorzugten Ausführungsform ist der Aufnahmebauteil eine Seilbahnstütze und der Bauteil der Rollenbatterie eine Trägereinheit der Rollenbatterie oder ein Träger der Rollenbatterie. In einer anderen bevorzugten Ausführungsform ist der Aufnahmebauteil ein Träger der Rollenbatterie und der Bauteil der Rollenbatterie ist eine Trägereinheit der Rollenbatterie. Die Erfindung kann damit an unterschiedlichsten Lagerungen im Bereich einer Rollenbatterie einer Seilbahn angewandt werden.

Vorzugsweise ist der zumindest eine Sensor ein Endschalter oder ein Näherungssensor. Diese Art von Sensoren sind zuverlässig und in verschiedensten Ausführungsformen verfügbar.

In einer bevorzugten Ausführungsform weist das Aufnahmebauteil zumindest ein Sicherungselement auf, um bei Versagen des Verbindungselements die Rollenbatterie über das zumindest eine Sicherungselement an dem Aufnahmebauteil zu lagern. Da der zumindest eine Sensor die Lagerung ständig überwacht und die Rollenbatterie auch bei Versagen des Verbindungselements durch das zumindest eine Sicherungselement an dem Aufnahmebauteil gelagert bleibt, können die Wartungsintervalle der periodischen Rissprüfung des Verbindungselements verlängert werden.

Vorzugsweise umfasst das zumindest eine Sicherungselement den zumindest einen Sensor. Bei Versagen des Verbindungselements bleibt die Rollenbatterie über das zumindest eine

Sicherungselement an dem Aufnahmebauteil gelagert. Dabei tritt die Rollenbatterie mit dem zumindest einen Sicherungselement in Kontakt. Daher ist es vorteilhaft im Bereich dieser Kontaktstelle des Sicherungselements mit der Rollenbatterie den zumindest einen Sensor anzuordnen.

In einem vorteilhaften Verfahren zur Überwachung einer Lagerung einer Rollenbatterie einer Seilbahn ist zumindest ein Sensor vorgesehen, wobei der Sensor eine vorgegebene radiale Lageänderung der Rollenbatterie zur Drehachse aus der radialen Soll-Lage erfasst und der zumindest eine Sensor einen Stromfluss unterbricht oder herstellt, wodurch eine Aktion ausgelöst wird. Durch die Erfassung der vorgegebenen radialen Lageänderung der Rollenbatterie kann eine defekte Lagerung (z.B. durch zu hohen Verschleiß) frühzeitig erkannt werden.

Vorzugsweise wird durch die ausgelöste Aktion ein Alarmsignal erzeugt. Dieses Alarmsignal kann beispielsweise für ein Seilbahnpersonal in einem Kontrollraum der Seilbahn visuell und/oder akustisch mitgeteilt werden. Mit dem Alarmsignal kann im Notfall die Seilbahn auch gestoppt werden.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig. 1 den grundlegenden Aufbau einer Anordnung zur Überwachung einer Lagerung einer Rollenbatterie einer Seilbahn,
Fig. 2 eine Schnittansicht der Lagerung der Rollenbatterie,
Fig. 3 eine Seitenansicht eines Sicherungselements mit zwei Sensoren,
Fig. 4 eine weitere Ausführungsform einer Lagerung einer Rollenbatterie,
Fig. 5 eine Seitenansicht der weiteren Ausführungsform der Lagerung der Rollenbatterie.

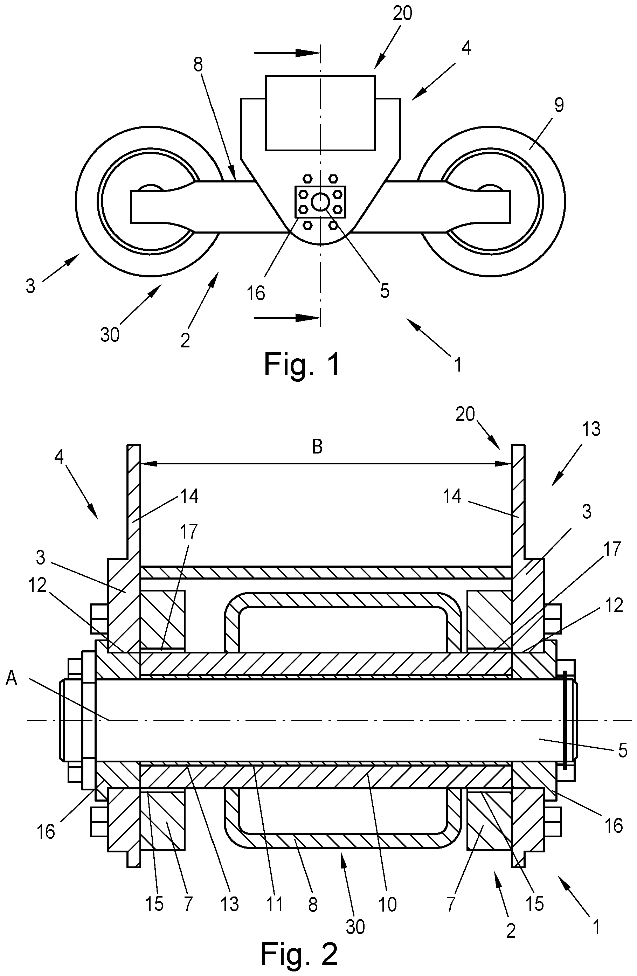

In Fig. 1 ist der grundlegende Aufbau einer Anordnung 1 zur Überwachung einer Lagerung 2 einer Rollenbatterie 3 einer Seilbahn dargestellt. Die Seilbahn ist aus Gründen der Übersichtlichkeit in den Figuren nicht dargestellt. Die Rollenbatterie 3 kann eine Trägereinheit 8 und eine Anzahl an Rollen 9 umfassen, wobei die Rollen 9 an der Trägereinheit 8 gelagert sind. Die Trägereinheit 8 ist in der Ausgestaltung der Fig. 2 als ein Formrohr ausgeführt, wobei natürlich unterschiedliche Ausführungsformen und unterschiedliche Querschnitte denkbar sind.

Die Lagerung 2 umfasst einen Aufnahmebauteil 20 und einen Bauteil 30 der Rollenbatterie 3. Der Bauteil 30 der Rollenbatterie ist mittels der Lagerung 2 am Aufnahmebauteil 20 verschwenkbar gelagert angeordnet. Es kommen unterschiedliche Komponenten einer Seilbahn als Aufnahmebauteil 20 in Frage. Vorzugsweise ist der Aufnahmebauteil 20 eine Seilbahnstütze 4 oder ein Teil einer Seilbahnstütze 4. In Fig. 1 ist als Aufnahmebauteil 20 die Seilbahnstütze 4 vorgesehen. Dabei ist nur ein Teil der Seilbahnstütze 4, z.B. der Querträger, dargestellt. Der Querträger der Seilbahnstütze 4 kann weiters eine Halteeinrichtung umfassen, welche als Aufnahmebauteil 20 dienen kann. Als Aufnahmebauteil 20 kann aber auch ein Teil der Rollenbatterie 3 dienen, wie weiter unten noch erläutert wird.

In der Ausführung der Fig. 1 ist der Bauteil 30 der Rollenbatterie 3 die Trägereinheit 8 der Rollenbatterie 3, an der die Rollen 9 gelagert angeordnet sind. Als Bauteil 30 der Rollenbatterie 3 kann aber auch ein Träger 8 der Rollenbatterie 3 verwendet werden, wie weiter unten noch ausgeführt wird.

In Fig. 2 ist eine Schnittansicht der Lagerung 2 dargestellt. Der Bauteil 30 der Rollenbatterie 3 ist über ein Verbindungselement 5 um eine Drehachse A schwenkbar an dem Aufnahmebauteil 20 gelagert. Wie in Fig. 2 dargestellt ist die Rollenbatterie 3 beispielswiese über die Trägereinheit 8 (als Bauteil 30 der Rollenbatterie 3) relativ zur Seilbahnstütze 4 (als Aufnahmebauteil 20) um eine Drehachse A schwenkbar gelagert. Dazu kann die Trägereinheit 8 der Rollenbatterie 3 einen Lagerteil 10 aufweisen, wobei im Lagerteil 10 eine Verbindungsausnehmung 11 vorgesehen ist. Wie in Fig. 2 dargestellt, kann der Lagerteil 6 z.B. als ein Hohlzylinder ausgeführt sein, welcher sich durch den Querschnitt der Trägereinheit 8 erstreckt.

An dem Aufnahmebauteil 20 ist vorzugsweise zumindest eine Halteausnehmung 12 (z.B. eine Bohrung) vorgesehen. In der Ausführungsform in Fig. 2 umfasst die Seilbahnstütze 4 als Aufnahmebauteil 20 beispielsweise zwei Wangen 14, wobei in den Wangen 14 jeweils eine Halteausnehmung 12 vorgesehen ist. Zwischen den Wangen 14 besteht dabei ein Aufnahmebereich B für den Lagerteil 10 der Trägereinheit 8.

In Fig. 2 ist das Verbindungselement 5 durch die Verbindungsausnehmung 11 des Lagerteils 10 der Trägereinheit 8 und durch die Halteausnehmungen 12 der Seilbahnstütze 4 gesteckt. Damit ist die Rollenbatterie 3 mit der Trägereinheit 8 über das Verbindungselement 5 um die Drehachse A schwenkbar an der Seilbahnstütze 4 gelagert. Das Verbindungselement 5 kann dabei z.B. als ein Bolzen ausgeführt sein. Das Verbindungselement 5 kann auch noch ein Lagerelement 13 umfassen, welches zwischen einer Umfangsfläche des Verbindungselements 5 und der Verbindungsausnehmung 11 des Lagerteils 10 angeordnet ist. Das Lagerelement 13 kann als ein Hohlzylinder (z.B. eine Buchse, Gleitlagerbuchse) ausgeführt sein.

Das Verbindungselement 5 kann weiters beispielsweise an der Umfangsfläche zumindest eine Umlaufnut aufweisen, wobei in der Umlaufnut ein Sicherungsring vorgesehen ist, welcher dazu dient das Verbindungselement 5 in Richtung der Drehachse A zu fixieren.

Durch die Lagerung 2 des Bauteils 30 der Rollenbatterie 3 über das Verbindungselement 5 an dem Aufnahmebauteil 20 ist die Rollenbatterie 3 in einer radialen Soll-Lage zur Drehachse A angeordnet. Vorzugsweise ist der Lagerteil 10 der Trägereinheit 8 der Rollenbatterie 3 koaxial zur Drehachse A angeordnet.

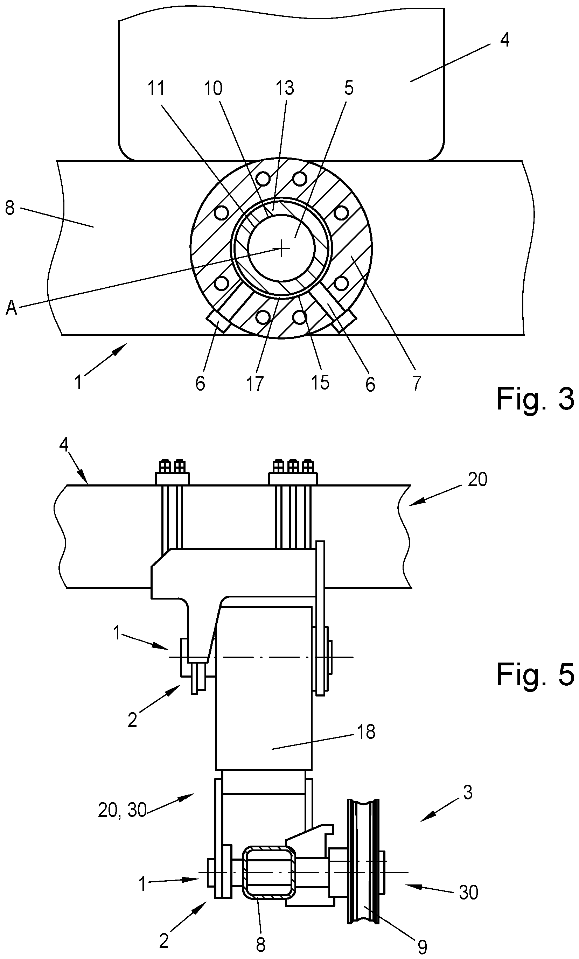

An dem Aufnahmebauteil 20 ist vorzugsweise zumindest ein Sicherungselement 7 angeordnet, wobei durch die Anordnung eine Relativbewegung zwischen Sicherungselement 7 und Aufnahmebauteil 20 radial zur Drehachse A, insbesondere in Richtung einer auf die Trägereinheit 8 wirkende Schwerkraft, unterbunden ist. Das zumindest eine Sicherungselement 7 kann, z.B. mit Schrauben, fest mit dem Aufnahmebauteil 20 verbunden sein. In der Ausführungsform in Fig. 2 sind zwei Sicherungselemente 7 dargestellt. Am Sicherungselement 7 ist eine Sicherungsausnehmung 15 vorgesehen. Der Form der Sicherungsausnehmung 15 stimmt vorzugsweise mit dem Querschnitt des Lagerteils 10 überein. Damit bei Versagen des Verbindungselements 5 die Rollenbatterie 3 über das zumindest eine Sicherungselement 7 an dem Aufnahmebauteil 20 gelagert beleibt, ist der Lagerteil 10 der Trägereinheit 8 zumindest teilweise in der Sicherungsausnehmung 15 des Sicherungselements 7 angeordnet. In Fig. 3 ist eine Seitenansicht eines Sicherungselements 7 der Lagerung 2 dargestellt. Das Sicherungselement 7 ist dabei ringförmig dargestellt. Natürlich kann das Sicherungselement 7 mit anderen Querschnitten ausgeführt sein.

Weiters kann die Lagerung 2 zumindest einen Lagerdeckel 16 umfassen, welcher an dem Aufnahmebauteil 20 befestigt ist. In der Ausführungsform der Lagerung 2 in Fig. 2 sind zwei Lagerdeckel 16 dargestellt.

In der Anordnung 1 ist zumindest ein Sensor 6 vorgesehen, wobei der zumindest eine Sensor 6 im Bereich der Lagerung 2 angeordnet ist, um eine radiale Lageänderung der Rollenbatterie 3 zur Drehachse A aus der radialen Soll-Lage zu erfassen. Vorzugsweise umfasst das Sicherungselement 7 den zumindest einen Sensor 6. Natürlich kann der zumindest eine Sensor 6 im Bereich der Lagerung 2 an unterschiedlichen Positionen angeordnet sein. Der zumindest eine Sensor 6 kann z.B. auch an dem Aufnahmebauteil 20 vorgesehen sein. Dabei kann die Anordnung 1 auch eine Mehrzahl an Sensoren 6 umfassen. In Fig. 3 sind beispielsweise zwei Sensoren im Sicherungselement 7 vorgesehen. Vorzugsweise ist der zumindest eine Sensor 6 ein Endschalter oder ein Näherungssensor.

Der zumindest eine Sensor 6 ist dazu ausgebildet, beim Erfassen einer vorgegebenen radialen Lageänderung der Rollenbatterie 3 zur Drehachse A aus der radialen Soll-Lage einen Stromfluss zu unterbrechen oder herzustellen, um eine Aktion auszulösen. Beispielsweise kann eine maximal zulässige radiale Lageänderung der Rollenbatterie 3 vorgegeben sein, z.B. durch die Anordnung des zumindest einen Sensors 6, wie nachfolgend beschrieben.

Beim Erfassen der vorgegebenen radialen Lageänderung kann z.B. ein Stromfluss, welcher durch den Sensor 6 fließt, unterbrochen oder hergestellt werden. Im Falle eines Endschalters als Sensor 6 kann durch das Lagerteil 10, oder einem anderen Teil des Bauteils 30, z.B. ein mechanisches Element des Endschalters betätigt werden, um den Stromfluss zu unterbrechen oder herzustellen. Als ausgelöste Aktion wird vorzugsweise ein Alarmsignal erzeugt, welches z.B. einem Seilbahnpersonal in einem Kontrollraum der Seilbahn visuell und/oder akustisch mitgeteilt wird. Mit dem Alarmsignal kann beispielsweise auch in die Seilbahnsteuerung eingegriffen werden, beispielsweise um einen Antrieb der Seilbahn zu stoppen oder eine Fördergeschwindigkeit der Seilbahn zu reduzieren.

In Fig. 3 besteht ein Spalt 17 zwischen der Sicherungsausnehmung 15 des Sicherungselements 7 und des Lagerteils 10 der Trägereinheit 8 der Rollenbatterie 3. Dabei sind der Lagerteil 6 der Trägereinheit 8 und die Sicherungsausnehmung 15 des Sicherungselements 7 koaxial zur Drehachse A angeordnet. Die beiden Sensoren 6 sind in radialer Richtung zur Drehachse A im Sicherungselement 7 angeordnet und ragen in den Spalt 17. Aufgrund der Anordnung der beiden Sensoren kann beispielsweise der Spalt 17 als maximal zulässige Lageänderung der Rollenbatterie 3 vorgegeben sein. Denn kommt es zum Verschleiß der Lagerung, z.B. der Verbindungsausnehmung 11 des Lagerteils 10 oder des Verbindungselements 5 oder des Lagerelements 13, bewegt sich der Lagerteil 10 der Trägereinheit 8 der Rollenbatterie 3 radial in Richtung der Sensoren (durch die Schwerkraft), wodurch sich der Spalt schließt. Die radiale Lageänderung des Lagerteils 10 wird zumindest von einem der Sensoren 6 erfasst. Im Falle von Endschaltern als Sensoren 6 kommt es durch die radiale Lageänderung des Lagerteils 10 zum Kontakt zwischen dem Lagerteil 10 und zumindest einem Sensor 6, wodurch z.B. ein mechanisches Element des Endschalters betätigt wird und ein Stromfluss durch den Sensor 6 unterbrochen oder hergestellt wird. Bei einem Näherungsschalter als Sensor 6 kann die vorgegebene radiale Lageänderung des Lagerteils 10 beispielsweise auch ohne Kontakt erfasst werden.

Neben dem Verschleiß der Lagerung 2 kann auch ein Versagen z.B. des Verbindungselements 5 eine radiale Lageänderung der Rollenbatterie 3 auslösen. Dazu kann zusätzlich als zumindest ein Sensor 6 ein Beschleunigungssensor im Bereich der Lagerung 2 vorgesehen sein. Damit kann beispielsweise eine schlagartige Beschleunigung, welche charakteristisch für einen Bruch des Verbindungselements 5 sein kann, erfasst werden.

Je nach Anordnung und Anzahl des zumindest einen Sensors 6 kann eine Verkippung der Lagerung 2 erkannt werden. Bei einer Verkippung ist beispielsweise der Lagerteil 10 der Trägereinheit 8 im Gegensatz zur koaxialen Anordnung um einen Winkel zur Drehachse A geneigt. Die Verkippung der Lagerung 2 kann beispielsweise bei einem ungleichmäßigen Verschleiß (z.B. aufgrund einer einseitigen Belastung der Lagerung 2) oder bei Versagen des Verbindungselements 5 auftreten. In der Ausführungsform der Lagerung 2 in Fig. 2 könnten dazu zwei Sicherungselement 7 mit jeweils vier Sensoren 6 (einer in jedem Quadranten des Sicherungselements 7) vorgesehen sein. Im Falle einer Verkippung des Lagerteils 10 erfasst z.B. jeweils ein Sensor 6 eines Sicherungselements 7 eine radiale Lageänderung des Lagerteils 10, wobei jene zwei Sensoren 6 ansprechen, welche in radialer Richtung zur Drehachse A gegenüberliegenden Quadranten angeordnet sind.

Weiters kann das Sicherungselement 7 auch ein Einstellelement (nicht dargestellt), z.B. eine Schraube, umfassen. Beispielsweise könnte anstatt eines Sensors in Fig. 3 eine Schraube als Einstellelement vorgesehen sein. Durch Einschrauben der Schraube in das Sicherungselement 9 tritt diese in Kontakt mit dem Lagerteil 10, wodurch der Lagerteil 10 in Richtung Drehachse A bewegt wird. Dadurch kann insbesondere das Einstecken des Verbindungselements 5 in die Lagerung 2 bei einer Montage oder Wartung vereinfacht werden.

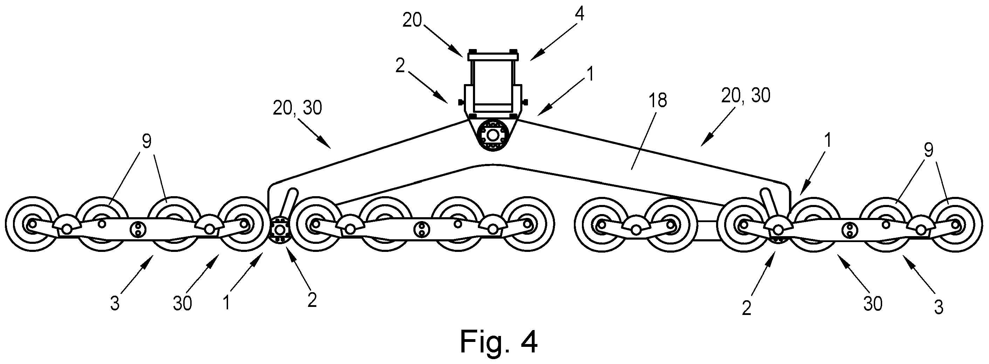

In Fig. 4 ist eine weitere Ausführungsform einer Lagerung 2 einer Rollenbatterie 3 einer Seilbahn dargestellt. In Fig. 5 ist eine Seitenansicht der weiteren Ausführungsform dargestellt. Dabei umfasst die Rollenbatterie 3 zusätzlich einen Träger 18, an welchem jeweils eine Trägereinheit 8 mit Rollen 9 mit einer Lagerung 2 gelagert ist. Der Träger 18 ist dabei das Aufnahmebauteil 20 und die Trägereinheit 8 der jeweiligen Rollenbatterie 3 ist das Bauteil 30 der Rollenbatterie 3 der Lagerung 2. Der Träger 18 der Rollenbatterie 3 ist wiederum mit einer weiteren Lagerung 2 an der Seilbahnstütze 4 gelagert. Bei dieser Lagerung 2 ist der Träger 18 das Bauteil 30 der Rollenbatterie 3 und die Seilbahnstütze 4 das Aufnahmebauteil 20. Dabei ist vorzugsweise die erfindungsgemäße Anordnung 1 in jeder der Lagerung 2 vorgesehen, um diese zu überwachen.

## Patentansprüche

1. Anordnung (1) zur Überwachung einer Lagerung (2) einer Rollenbatterie (3) einer Seilbahn, wobei die Lagerung (2) einen Aufnahmebauteil (20) und einen Bauteil (30) der Rollenbatterie (3) umfasst, wobei der Bauteil (30) der Rollenbatterie (3) über ein Verbindungselement (5) um eine Drehachse (A) schwenkbar an dem Aufnahmebauteil (20) gelagert ist und die Rollenbatterie (3) dabei in einer radialen Soll-Lage zur Drehachse (A) angeordnet ist, **dadurch gekennzeichnet, dass** zumindest ein Sensor (6) vorgesehen ist, wobei der zumindest eine Sensor (6) im Bereich der Lagerung (2) angeordnet ist, um eine radiale Lageänderung der Rollenbatterie (3) zur Drehachse (A) aus der radialen Soll-Lage zu erfassen, wobei der zumindest eine Sensor (6) ausgebildet ist, beim Erfassen einer vorgegebenen radialen Lageänderung der Rollenbatterie (3) zur Drehachse (A) aus der radialen Soll-Lage einen Stromfluss zu unterbrechen oder herzustellen, um eine Aktion auszulösen.

2. Anordnung (1) nach Anspruch 1, **dadurch gekennzeichnet, dass** der Aufnahmebauteil (20) eine Seilbahnstütze (4) ist und der Bauteil (30) der Rollenbatterie (3) eine Trägereinheit (8) der Rollenbatterie (3) oder ein Träger (18) der Rollenbatterie (3) ist.

3. Anordnung (1) nach Anspruch 1, **dadurch gekennzeichnet, dass** der Aufnahmebauteil (20) ein Träger (18) der Rollenbatterie (3) ist und der Bauteil (30) der Rollenbatterie (3) eine Trägereinheit (8) der Rollenbatterie (3) ist.

4. Anordnung (1) nach einem der Ansprüche 1 bis 3, **dadurch gekennzeichnet, dass** der zumindest eine Sensor (6) ein Endschalter oder ein Näherungssensor ist.

5. Anordnung (1) nach einem der Ansprüche 1 bis 4, **dadurch gekennzeichnet, dass** das Aufnahmebauteil (20) zumindest ein Sicherungselement (7) aufweist, um bei Versagen des Verbindungselements (5) die Rollenbatterie (3) über das zumindest eine Sicherungselement (7) an dem Aufnahmebauteil (20) zu lagern.

6. Anordnung (1) nach einem der Ansprüche 1 bis 5, **dadurch gekennzeichnet, dass** das zumindest eine Sicherungselement (7) den zumindest eine Sensor (6) umfasst.

7. Verfahren zur Überwachung einer Lagerung (2) einer Rollenbatterie (3) einer Seilbahnmit einer Anordnung nach einem der Ansprüche 1 bis 6, wobei ein Bauteil (30) der Rollenbatterie (3) über ein Verbindungselement (5) um eine Drehachse (A) schwenkbar an einem Aufnahmebauteil (20) gelagert ist und die Rollenbatterie (3) dabei in einer radialen Soll-Lage zur Drehachse (A) angeordnet ist, **dadurch gekennzeichnet, dass** zumindest ein Sensor (6) vorgesehen ist, wobei der Sensor (6) eine vorgegebene radiale Lageänderung der Rollenbatterie (3) zur Drehachse (A) aus der radialen Soll-Lage erfasst und der zumindest eine Sensor (6) einen Stromfluss unterbricht oder herstellt, wodurch eine Aktion ausgelöst wird.

8. Verfahren nach Anspruch 7, **dadurch gekennzeichnet, dass** durch die ausgelöste Aktion ein Alarmsignal erzeugt wird.
